# FASCICULE DE BREVET EUROPEEN

(11) **EP 0 747 867 B1**
(45) Date de publication et mention de la délivrance du brevet: **27.10.1999**
(21) Numéro de dépôt: 96401200.9
(22) Date de dépôt: 05.06.1996
(51) Int. Cl.: G07F 7/10

(54) **Procédé de réalisation d'un paiement utilisant un gestionnaire de comptes**
Verfahren zur Ausführen einer Bezahlung unter Verwendung eines Kontenverwalters
Method for making a payment using an account manager

(30) Priorité: 08.06.1995 FR 9506769
(43) Date de publication de la demande: 11.12.1996
(73) Titulaire: FRANCE TELECOM, 75015 Paris (FR)
(72) Inventeur: Vallee, Luc, 14000 Caen (FR); Petit, Stéphane, 14470 Couseules sur Mer (FR)
(74) Mandataire: Dubois-Chabert, Guy

(56) Documents cités:
- EP-A- 0 391 261
- EP-A- 0 542 298
- WO-A-85/03787
- DAVID CHAUM: "Security without Identification : Transaction systems to make Big Brother obsolete." COMMUNICATIONS OF THE ASSOCIATION FOR COMPUTING MACHINERY, vol. 28, no. 10, 1985, NEW YORK US, pages 1030-1044, XP002000086
- GENNADY MEDVINSKY & B.CLIFFORD NEUMAN: "NetCash : A design for practical electronic currency on the InterNet." PROCEEDINGS OF THE FIRST ACM CONFERENCE ON COMPUTER AND COMMUNICATIONS SECURITY, 3 - 5 novembre 1993, FAIRFAX, VIRGINIA (US), pages 102-106, XP000600524
- CHAUM D: "ACHIEVING ELECTRONIC PRIVACY" SCIENTIFIC AMERICAN, vol. 267, no. 2, 1 août 1992, pages 76-81, XP000329993
- JAN L. CAMENISCH ET.AL.: "An Efficient Electronic Payment System Protecting Privacy." PROCEEDINGS ESORICS '94 (THIRD EUROPEAN SYMPOSIUM ON RESEARCH IN COMPUTER SECURITY) / LECTURE NOTES IN COMPUTER SCIENCE., vol. 875, novembre 1994, BRIGHTON - UK, pages 207-215, XP000565346
- TATSUAKI OKAMOTO ET AL: "UNIVERSAL ELECTRONIC CASH" 11 août 1991 , ADVANCES IN CRYPTOLOGY, CRYPTO-91 AUG. 11 - 15, 1991, NR. -, PAGE(S) 324 - 337 , FEIGENBAUM J / SANTA BARBARA XP000269038 * page 329 - page 336 *
- CHAUM D ET AL: "UNTRACEABLE ELECTRONIC CASH" ADVANCES IN CRYPTOLOGY, SANTA BARBARA, AUG. 21 - 25, 1988, 1 janvier 1988, GOLDWASSER S, pages 319-327, XP000090658
- BURK H ET AL: "VALUE EXCHANGE SYSTEMS ENABLING SECURITY AND UNOBSERVABILITY" COMPUTERS & SECURITY INTERNATIONAL JOURNAL DEVOTED TO THE STUDY OF TECHNICAL AND FINANCIAL ASPECTS OF COMPUTER SECURITY, vol. 9, no. 8, 1 décembre 1990, pages 715-721, XP000176619

## Description

### Domaine technique

La présente invention a pour objet un procédé de réalisation d'un paiement utilisant un gestionnaire de comptes, ledit procédé garantissant le paiement du fournisseur et l'anonymat du client.

### Etat de la technique antérieure

Les systèmes à carte de crédit ou de débit offrent une garantie de paiement, mais, chaque paiement étant notifié au gestionnaire du compte associé à la carte, l'anonymat du client n'est nullement protégé.

Les systèmes "porte-monnaie" tels que définis dans la référence [3] permettent de relier les paiements entre eux, à cause de l'utilisation d'un identifiant de support et de clés fixes. Le rechargement direct à l'aide d'un compte bancaire brise l'anonymat en reliant l'identité du titulaire du compte et le support du porte-monnaie.

Les systèmes de télépaiement, par télévirement ou avec carte bancaire à mémoire, tels qu'ils sont définis par l'AFPAD ou Association Française pour le Paiement à Distance (référence [2]), offrent au fournisseur la garantie de paiement, mais n'assurent pas l'anonymat du client.

Un procédé connu, tel que décrit dans la référence [1], propose une gestion des comptes anonymes par un gestionnaire des comptes non anonymes. Un tel gestionnaire peut assez facilement briser l'anonymat de ses clients. De plus, l'ordre dans lequel le client dépose les pièces électroniques sur son compte anonyme est obligatoirement le même que celui dans lequel il les a retirées.

Un procédé de l'art connu dit à "jeton sécurisé", tel que décrit dans la référence [5], offre une garantie de paiement au fournisseur, mais le gestionnaire des comptes connaît toutes les transactions (rechargements et paiements) effectuées par le client porteur du jeton, ainsi que l'identité de celui-ci.

Un autre procédé de transaction connu est décrit dans [6].

Pour palier ces inconvénients des procédés de l'art connu, la présente invention a pour objet, tout en conservant la garantie de paiement pour le fournisseur, de protéger la vie privée du client en préservant son anonymat.

### Exposé de l'invention

La présente invention concerne un procédé de réalisation d'une transaction, dans lequel :
- on sépare une première entité (banque B) distribuant un moyen électronique anonyme permettant de créditer un compte, anonyme ou non, qu'un utilisateur (client U) possède auprès d'une seconde entité (kiosque K), et une seconde entité hébergeant, pour chaque utilisateur, un ou plusieurs comptes, anonymes ou non, comptes que chaque utilisateur crédite avec le moyen électronique anonyme et débite pour payer d'autres utilisateurs ;
- on utilise le moyen électronique anonyme utilisant des nombres aléatoires, retiré auprès de la première entité pour créditer le compte, anonyme ou non, hébergé par la seconde entité ;
- on utilise des tables de nombres aléatoires associés à chaque compte, anonyme ou non, pour permettre un ordre des opérations de crédit de chaque compte indépendant de l'ordre des opérations de retrait de ces nombres auprès de la seconde entité par l'utilisateur propriétaire du compte et indépendant de l'ordre des utilisations de ces nombres pour le retrait de moyen électronique anonyme auprès de la première entité ;
et qui comprend les étapes suivantes :
- la seconde entité génère les nombres aléatoires pour chaque compte, anonyme ou non, permettant un ordre des opérations de retrait de ces nombres auprès de la seconde entité par l'utilisateur propriétaire du compte indépendant de l'ordre des utilisations de ces nombres pour le retrait du moyen électronique anonyme auprès d'une première entité distributrice ;
- l'utilisateur, à l'aide d'un quelconque moyen de paiement, acquiert auprès de l'entité distributrice, le moyen électronique anonyme pour un certain montant, en utilisant l'un des nombres aléatoires attachés au compte, anonyme ou non, hébergé par la seconde entité, qu'il veut créditer ;
- l'utilisateur crédite un compte, anonyme ou non, auprès de l'entité hébergeant un ou plusieurs comptes, anonymes ou non, pour ce montant, à l'aide de ce moyen électronique anonyme acquis auprès de l'entité distributrice, et le nombre aléatoire utilisé est supprimé de la table attachée au compte crédité ;
- l'utilisateur débite un ou plusieurs comptes, anonymes ou non, pour créditer un compte, anonyme ou non, d'un second utilisateur (fournisseur).

Selon l'invention, un fournisseur obtient la garantie d'être payé et le client reste anonyme au sens que son identité n'est pas liée à ses paiements, et que la possibilité de relier les paiements entre eux peut être diminuée à volonté.

Avantageusement, pour recharger un compte anonyme déterminé, l'utilisateur (client) obtient d'une seconde entité (kiosque) au moins un nombre aléatoire, puis achète auprès d'une première entité (banque) une signature sous forme d'une pièce électronique pour un montant donné pour chaque nombre aléatoire. Il dépose ensuite les pièces correspondantes sur un compte déterminé dans un ordre quelconque à un temps quelconque. La seconde entité présente ensuite les pièces pour être crédité par la première entité.

Avantageusement lors d'un achat, le second utilisateur (fournisseur) envoie une requête indiquant le montant au premier utilisateur (client) qui la signe et la retourne au second utilisateur. Celui-ci la transmet pour paiement à la seconde entité (kiosque) qui, en cas de crédit suffisant sur le compte anonyme utilisé par le premier utilisateur, acquitte la demande de façon positive et procède à l'opération de crédit-débit correspondant.

Le premier utilisateur (client) dispose de la possibilité de transférer tout ou partie de cet argent de compte anonyme à compte anonyme, ainsi que de rembourser tout ou partie des sommes sur ces comptes anonymes auprès de la première entité (banque).

L'invention propose donc un procédé qui rompt les possibilités de liens entre un paiement et un retrait et, selon la volonté du client, entre deux paiements.

Le découpage entre les retraits et les paiements résulte de l'utilisation de comptes anonymes sur la seconde entité (kiosque) et de la séparation des deux phases de modifications de ces comptes anonymes.

Selon différentes variantes possibles de l'invention, on peut avoir les caractéristiques suivantes :
- le premier utilisateur (client) ouvre un compte anonyme auprès d'une seconde entité (kiosque) ;
- le premier utilisateur (client) achète auprès d'une première entité (banque), auprès de laquelle il possède un compte connu ou non (paiement en espèces), de l'argent électronique anonyme qu'il dépose sur un compte anonyme hébergé par une seconde entité dans un ordre non lié à celui de son achat ;
- le premier utilisateur dépose de l'argent électronique anonyme sur un compte anonyme hébergé par une seconde entité dans un ordre non lié à celui de son achat ;
- le premier utilisateur dépense l'argent déposé sur un compte anonyme, hébergé par une seconde entité, sous forme de virement sécurisé vers un compte, anonyme ou non, hébergé par une seconde entité ;
- le virement sécurisé est réalisé après une requête particulière ;
- des virements sécurisés sont réalisés après une requête de virement périodique sur une unité de périodicité donnée ;
- des virements sécurisés sont groupés pour être présentés ensemble à la seconde entité, après l'obtention d'une autorisation préalable, sur un montant donné, obtenue auprès de cette même entité ;
- le premier utilisateur peut autoriser avant consommation le prélèvement d'un montant plafond sur un compte anonyme par un second utilisateur (fournisseur) donné et pour une opération donnée, ce prélèvement étant réalisé après consommation effective du service ;
- le premier utilisateur se fait rembourser tout ou partie de l'argent qu'il possède sur un compte anonyme auprès d'une seconde entité pour le déposer sur un compte connu qu'il possède auprès d'une première entité ;
- le premier utilisateur peut à volonté rendre impossible tout lien entre paiements, en utilisant chaque compte anonyme une et une seule fois et éventuellement des facilités offertes par le système qui sont le transfert de compte anonyme à compte anonyme et le remboursement.

L'invention permet donc d'obtenir la garantie de paiement du second utilisateur (fournisseur) et la protection de l'anonymat du premier utilisateur (client). Elle peut trouver une application dans les systèmes nécessitant un paiement à la durée ou à l'acte, et dans le télépaiement vocal.

Dans une première variante de réalisation avantageuse, lors du paiement d'un second utilisateur (fournisseur), le montant signifié au premier utilisateur (client) peut être un montant unitaire. Le premier utilisateur de sa propre initiative envoie les signatures au second utilisateur avec la régularité nécessaire (périodiquement dans le temps ou à la page, à la requête, par exemple). Le second utilisateur transmet ces signatures au fil de l'eau à la seconde entité (kiosque) qui les acquitte de la même manière.

Dans une seconde variante de réalisation avantageuse, on a un groupement de paiements avec autorisation. Cette opération peut être réalisée à l'insu du premier utilisateur (client). Dans l'hypothèse précédente, pour ne pas être pénalisé pour des petits montants unitaires, le second utilisateur (fournisseur) peut accompagner la première signature du premier utilisateur (client) d'une demande d'autorisation auprès de la seconde entité (kiosque) pour un certain nombre d'unités et ne transmettre à la seconde entité le groupe des signatures que par paquet dont la somme est inférieure ou égale à l'autorisation demandée. Cette procédure peut être itérée lors d'une relation premier utilisateur (client) second utilisateur (fournisseur) (première demande insuffisante).

Dans une troisième variante de réalisation avantageuse, de façon à s'assurer d'un débit de compte anonyme dont le montant est connu après la connexion à la seconde entité (kiosque), il est possible avant la consommation du service de réaliser un prépaiement sur un montant supérieur au montant effectivement constaté. Le second utilisateur (fournisseur), après la consommation effective, remonte à la seconde entité (kiosque) l'information sur le montant consommé. La seconde entité, à hauteur maxima du montant du prépaiement, débite le compte anonyme du premier utilisateur (client).

Dans une quatrième variante de réalisation avantageuse, la liaison entre paiements est rendue impossible par l'utilisation une fois et une seule de chaque compte anonyme du premier utilisateur (client). Les transferts entre comptes anonymes et le remboursement anonyme facilitent cette utilisation unique des comptes anonymes.

Dans une application au télépaiement vocal le premier utilisateur (client) ne possède qu'un dispositif capable de mémoriser quelques valeurs intermédiaires (signatures aveugles, identités, etc), une clé secrète de production de signature et deux compteurs strictement croissants. Un appareil simple tel une Cartulette (marque déposée) avec couplage acoustique à fréquences vocales rend ce système opérant pour le télépaiement vocal.

Le procédé de l'invention peut également être avantageusement utilisé dans une application de paiement au fil de l'eau.

### Brève description des dessins

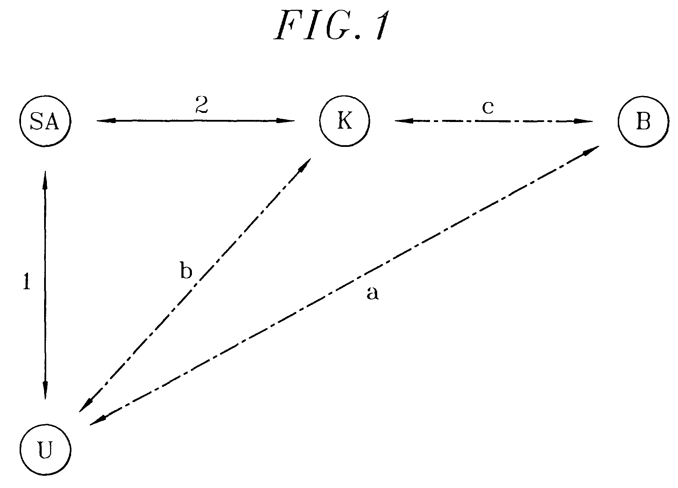

La figure représente une architecture et une cinématique globale illustrant le procédé de l'invention.

### Exposé détaillé de modes de réalisation

L'invention propose un procédé de réalisation d'un paiement utilisant un gestionnaire de comptes qui rompt les possibilités de liens entre un paiement et un retrait et, selon la volonté du client, entre deux paiements.

Le système met en oeuvre quatre types d'entités :
- un premier utilisateur U, client d'une banque B et d'un fournisseur S ;
- une première entité banque B distributrice de monnaie électronique "aveugle", gestionnaire éventuelle d'un compte classique du client U ;
- une seconde entité kiosque K, gestionnaire des comptes anonymes de clients U et de comptes pour des foumisseurs S ;
- un second utilisateur, fournisseur de biens ou de services S.

Le découplage entre les retraits et les paiements résulte de l'utilisation de comptes anonymes sur le kiosque et de la séparation des deux phases de modification de ces comptes anonymes.

Pour recharger un compte anonyme, le client obtient du kiosque au moins un nombre aléatoire, pour un compte anonyme déterminé, puis achète une signature aveugle (sous forme d'un pièce électronique) pour un montant donné pour chaque nombre aléatoire, auprès de la banque. Il dépose ensuite les pièces correspondantes sur un compte anonyme déterminé, dans un ordre quelconque, à un temps quelconque. Le kiosque présente ensuite les pièces pour être crédité par la banque.

Lors d'un achat, le fournisseur envoie une requête indiquant le montant au client qui la signe et la retourne au fournisseur. Celui-ci la transmet pour paiement au kiosque qui, en cas de crédit suffisant sur le compte anonyme utilisé par le client, acquitte la demande de façon positive et procède à l'opération de crédit-débit correspondant.

L'invention rend également possible le transfert entre comptes anonymes, ainsi que le remboursement de tout ou partie du solde d'un compte anonyme d'un client.

Sur la figure on a ainsi :
- U utilisateur (client payeur) ;
- SA serveur applicatif (prestataire payé) ;
- K kiosque (teneur des comptes anonymes) ;
- B tout distributeur de monnaie anonyme (banque, établissement de crédit).

La phase de rechargement est représentée en traits mixtes fins sur la figure et se décompose comme suit :
**a.** L'utilisateur U achète un chèque ou argent électronique "aveugle" au distributeur B d'un montant M' (en liquide, sur compte d'abonné ou par carte bancaire) ;
**b.** L'utilisateur U crédite un compte anonyme (associé à une clé secrète) sur le kiosque K avec ce chèque d'un montant M';
**c.** Le kiosque K envoie le chèque d'un montant M' au distributeur B pour compensation.

La phase de consommation est représentée par les traits continus et comprend deux dialogues :
**1.** Le serveur SA demande à l'utilisateur U d'encaisser un montant M ; l'utilisateur U envoie au serveur SA une transaction d'un montant M signée avec la clé secrète de son compte anonyme ;
**3.** Le serveur SA envoie cette transaction au kiosque K qui vérifie la signature, acquitte la transaction et compense les comptes (entre le compte anonyme de l'utilisateur U et le compte connu du serveur SA).

La répartition fonctionnelle sur ces différentes entités est la suivante :
*Banque:*
   - vente aveugle de pièces électroniques contre paiement en liquide ou débit d'un compte classique ;
   - paiement de pièces électroniques contre crédit d'un compte classique.
*Kiosque:*
   - gestion (ouverture, clôture, consultation, ..) de comptes anonymes;
   - crédit d'un compte anonyme contre dépôt d'une pièce électronique ;
   - débit d'un compte anonyme et crédit d'un autre compte, anonyme ou non, contre réception d'un ordre de débit du propriétaire du compte anonyme débité ;
   - participation aux retraits de pièces électroniques et aux remboursements de compte anonyme ;
   - compensation avec les banques et les fournisseurs.
*Client:*
   - enregistrement sous un pseudonyme (numéro de compte anonyme) auprès du kiosque ;
   - achat de pièces électroniques à la banque ;
   - dépôt de pièces électroniques sur un compte anonyme du kiosque ;
   - signature de l'ordre de paiement du fournisseur ;
   - remboursement d'un compte anonyme.
*Fournisseur (ou serveur applicatif)*:
   - enregistrement auprès du kiosque ;
   - transmission des ordres de paiement du client vers le kiosque ;
   - transmission éventuelle de l'acquittement du kiosque vers le client.

Les différents protocoles sont décrits ci-dessous. Un compte anonyme est désigné par un identificateur lC. Il lui est associé :
- un jeu de clés (K_{SC}, K_{VC}) : la première étant utilisée pour produire les signatures par le possesseur du compte anonyme et la seconde pour vérifier ces signatures ;
- un compteur des dépenses DC faites sur ce compte, initialisé à zéro ;
- un compteur des remboursements RC, initialisé également à zéro ;
- une table TC de nombres aléatoires fournis pour des retraits de pièces électroniques et non encore utilisés.

### Ouverture d'un compte anonyme

Le client se connecte de manière anonyme sur le kiosque et demande l'ouverture d'un compte anonyme. Les opérations consistent en :
- la détermination d'un numéro identificateur IC, partagé par les deux entités : client et kiosque ;
- la production et l'échange sécurisé des clés, la clé de signature K_{SC} étant connue du client, la clé de vérification K_{VC} étant connue des deux entités ou seulement du kiosque ;
- l'initialisation à zéro du compteur des dépenses DC et de celui des remboursements RC, compteurs mémorisés par les deux entités ;
- la création de la table de nombres aléatoires TC, vide.

### Réservation de nombres aléatoires préalable à un achat de pièces électroniques

Le client se connecte de manière anonyme, indique le numéro de compte lC et demande au kiosque une certaine quantité q de nombres aléatoires.

Le kiosque génère ces nombres aléatoires r₁, ..., r_{q}, en garde trace dans la table de nombres aléatoires TC attachée au compte de numéro lC, et les retourne au client sous une forme qui garantisse l'intégrité et l'authenticité de ces nombres aléatoires, par exemple par une signature de l'ensemble (K, IC, r₁, ..., r_{q}).

### Achat de pièces électroniques

Chaque nombre aléatoire rⱼ est utilisable pour le retrait d'une pièce électronique, dans un ordre d'utilisation quelconque par rapport à l'ordre de génération de ces nombres aléatoires.

Le retrait de pièces électroniques est une transaction entre le client et sa banque. Le client s'identifie et s'authentifie suivant les procédures habituelles entre ces deux entités, de manière à ce que le compte adéquat (bancaire, de facturation ou autre) CB soit débité. Cette opération n'est pas nécessaire si le client paie par un moyen anonyme (espèces).

Le retrait d'une pièce électronique se traduit par l'obtention d'une signature aveugle: la banque signe de manière aveugle un message du client contenant au moins l'identité du kiosque, le compte anonyme et un des nombres aléatoires retirés auprès du kiosque, soit K, IC, rᵢ. L'obtention de cette signature aveugle correspond au débit du compte CB ou au paiement en espèces pour un montant M en correspondance bi-univoque avec la fonction de signature utilisée.

Cette opération est répétée plusieurs fois si le client souhaite retirer plusieurs pièces électroniques lors de la même session.

### Dépôt de pièces électroniques au kiosque

Les pièces électroniques doivent être déposées sur le kiosque par le client. Ce dernier le dépose dans un ordre quelconque, sans rapport avec l'ordre de retrait des nombre aléatoires rᵢ, ni avec celui de retrait des pièces électroniques.

Pour cette transaction le client se connecte de manière anonyme sur le kiosque, en ne se référant qu'à son compte anonyme lC. Le client transmet au kiosque les pièces électroniques qu'il souhaite déposer, en donnant, au minimum, le compte lC, le nombre aléatoire rᵢ utilisé et la signature aveugle obtenue de la banque (en indiquant la banque et le moyen de trouver le montant M et la fonction de vérification associée). Pour chaque pièce, le kiosque vérifie que le nombre aléatoire présenté n'est pas utilisé, la validité de la signature de la banque, ôte de la table des nombres aléatoires TC l'entrée correspondant au nombre aléatoire utilisé et crédite le compte anonyme de numéro lC du montant M.

### Paiement du kiosque

Pour être payé par la banque, le kiosque présente les pièces électroniques (K, IC, rᵢ, signature aveugle). La banque vérifie les signatures, crédite le compte du kiosque et retourne le nouveau solde. La banque vérifie, si elle le souhaite, l'absence de double dépôt de pièces électroniques par le kiosque.

### Paiement d'un foumisseur

Pour procéder au paiement d'un fournisseur le client produit des signatures utilisant le compteur des dépenses DC. Le fournisseur notifie le montant M à payer au client. Le client incrémente son compteur (local) des dépenses DC, puis produit une signature du message comprenant K, lC, S, DC et M, avec la clé K_{SC} associée à son compte lC. Le fournisseur fait suivre cette signature et les informations utilisées à sa production au kiosque. Le kiosque vérifie la validité de la signature avec la clé K_{VC}, que le compte IC présente un solde suffisant, que la valeur du compteur des dépenses DC reçue est plus grande que la valeur qu'il connaît. Dans le cas où toutes ces conditions sont remplies, le kiosque remplace la valeur connue du compteur des dépenses par la valeur reçue du compteur des dépenses, débite le compte lC du montant M et crédite le compte du fournisseur de la même somme. Dans tous les cas, le kiosque envoie un acquittement signé au fournisseur qui le retransmet éventuellement au client (en cas d'acquittement négatif notamment).

### Transfert de compte anonyme à compte anonyme

Ce transfert est analogue au paiement d'un fournisseur. L'identité du fournisseur est remplacée par le numéro de compte anonyme de destination lC', et le montant M n'a pas à être transmis d'une entité au client. L'échange est direct entre le client et le kiosque.

### Remboursement

Le remboursement utilise un double mécanisme de signature aveugle.

L'initiative revient au client qui incrémente son compteur des remboursements RC. Le client cherche à obtenir une signature aveugle du message comprenant son numéro de compte CB à la banque, le compteur des remboursements RC, avec une signature de la banque correspondant à un montant M. Pour cela, il expédie ce message "aveuglé" au kiosque accompagné du numéro du compte anonyme lC, le montant M, l'identification de la banque et signe l'ensemble. Le kiosque vérifie que le solde du compte anonyme IC est suffisant, vérifie la signature. Il s'authentifie ensuite auprès de la banque pour être débité sur son compte ordinaire CBK. Il obtient de la banque une signature aveugle du message "aveuglé" et son compte CBK est débit du montant M. Il retourne cette signature aveugle de manière sécurisée au client qui en extrait la signature qu'il souhaitait obtenir.

Le client, ultérieurement, se fait rembourser le montant par la banque en lui transmettant le message comprenant le numéro de son compte à créditer CB, la valeur RC du compteur des remboursements utilisé via le kiosque, et la signature obtenue pour ce message. La banque vérifie la signature, la cohérence du compteur des remboursements RC et l'actualise, et enfin crédite le compte CB du montant M. Le dépôt à la banque se fait par valeurs de RC croissantes.

En annexe, en fin de description, ont été représentés les différents diagrammes d'échanges.

Dans une première variante, lors du paiement du fournisseur le montant M signifié au client est un montant unitaire. Le client, de sa propre initiative, envoie les signatures au fournisseur avec la régularité nécessaire (périodiquement dans le temps ou à la page, à la requête par exemple). Le fournisseur transmet ces signatures au fil de l'eau au kiosque qui les acquitte de la même manière.

Dans une seconde variante, on a un groupement de paiements avec autorisation. Cette opération peut être réalisée à l'insu du client. Dans l'hypothèse précédente, pour ne pas être pénalisé pour des petits montants unitaires, le fournisseur peut accompagner la première signature du client d'une demande d'autorisation auprès du kiosque pour un certain nombre d'unités et ne transmettre au kiosque le groupe des signatures que par paquet dont la somme est inférieure ou égale à celle correspondant à l'autorisation demandée. Cette procédure peut être itérée lors d'une relation client fournisseur lorsque la première demande est insuffisante.

Dans une troisième variante, de façon à s'assurer d'un débit de compte anonyme dont le montant est connu après la connexion au kiosque, il est possible avant la consommation du service, de réaliser un prépaiement pour un montant supérieur au montant effectivement constaté. Le fournisseur, après la consommation effective, remonte au kiosque l'information sur le montant consommé. Le kiosque, à hauteur maxima du montant du prépaiement, débite le compte anonyme du client.

Dans une quatrième variante la liaison entre paiements est rendue impossible par l'utilisation une fois et une seule de chaque compte anonyme du client. Les transferts entre comptes anonymes et le remboursement anonyme facilitent cette utilisation unique des comptes anonymes.

Dans une application au télépaiement vocal, le client ne doit posséder qu'un dispositif capable de mémoriser quelques valeurs intermédiaires (signatures aveugles, identités, etc..), une clé secrète de production de signature K_{SC} et deux compteurs strictement croissants DC et RC. Un appareil simple tel une Cartulette (marque déposée) avec couplage acoustique à fréquences vocales (DTMF) rend ce système opérant pour le télépaiement vocal.

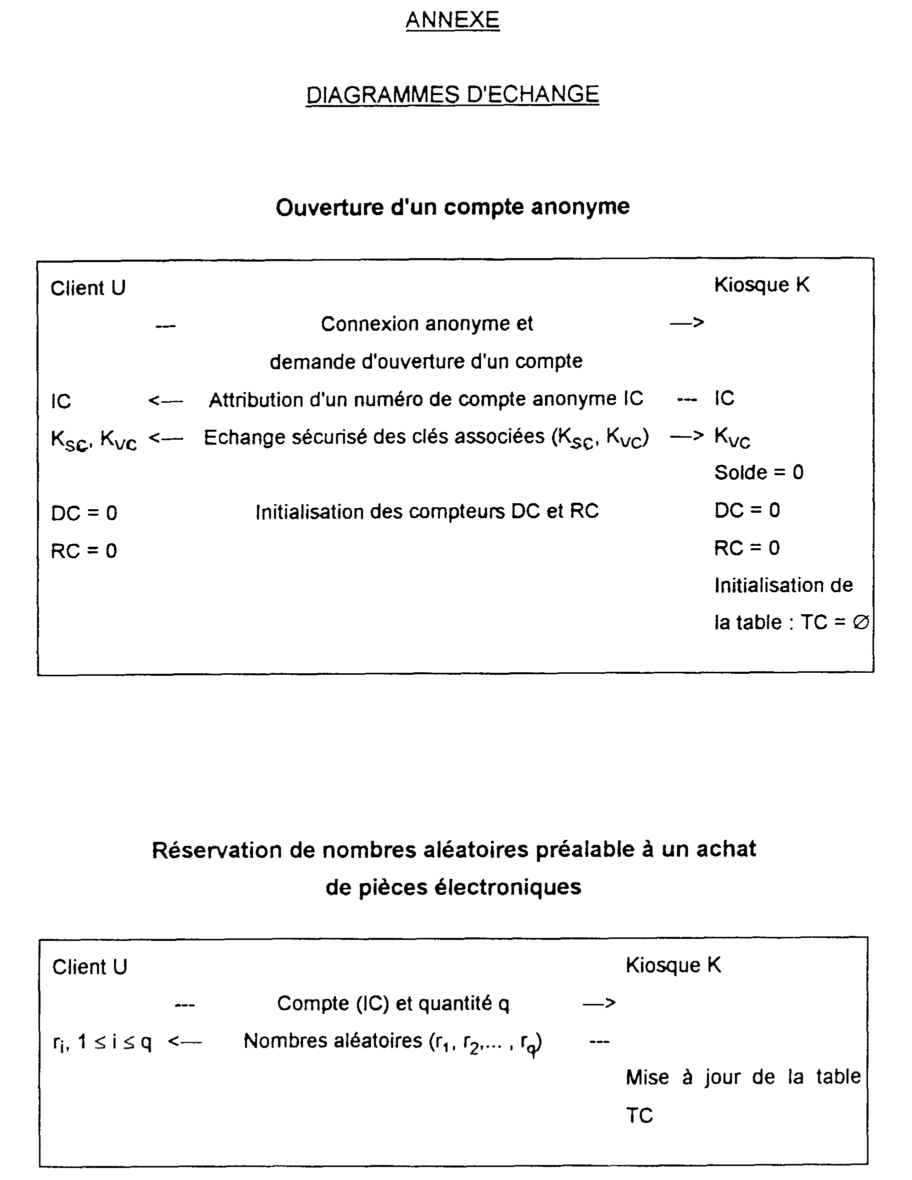

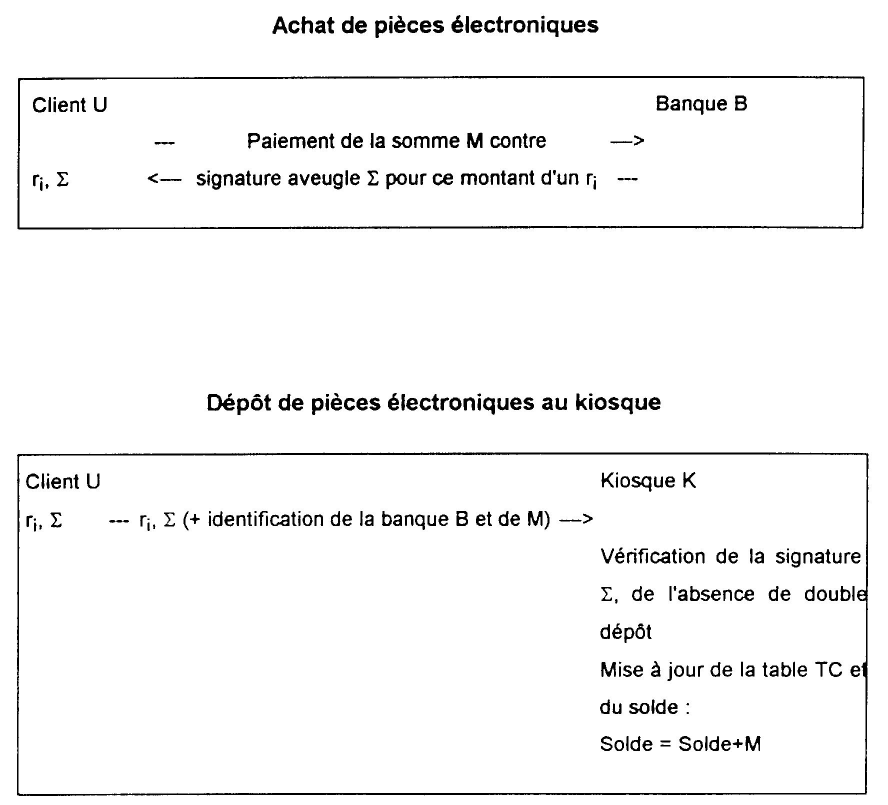

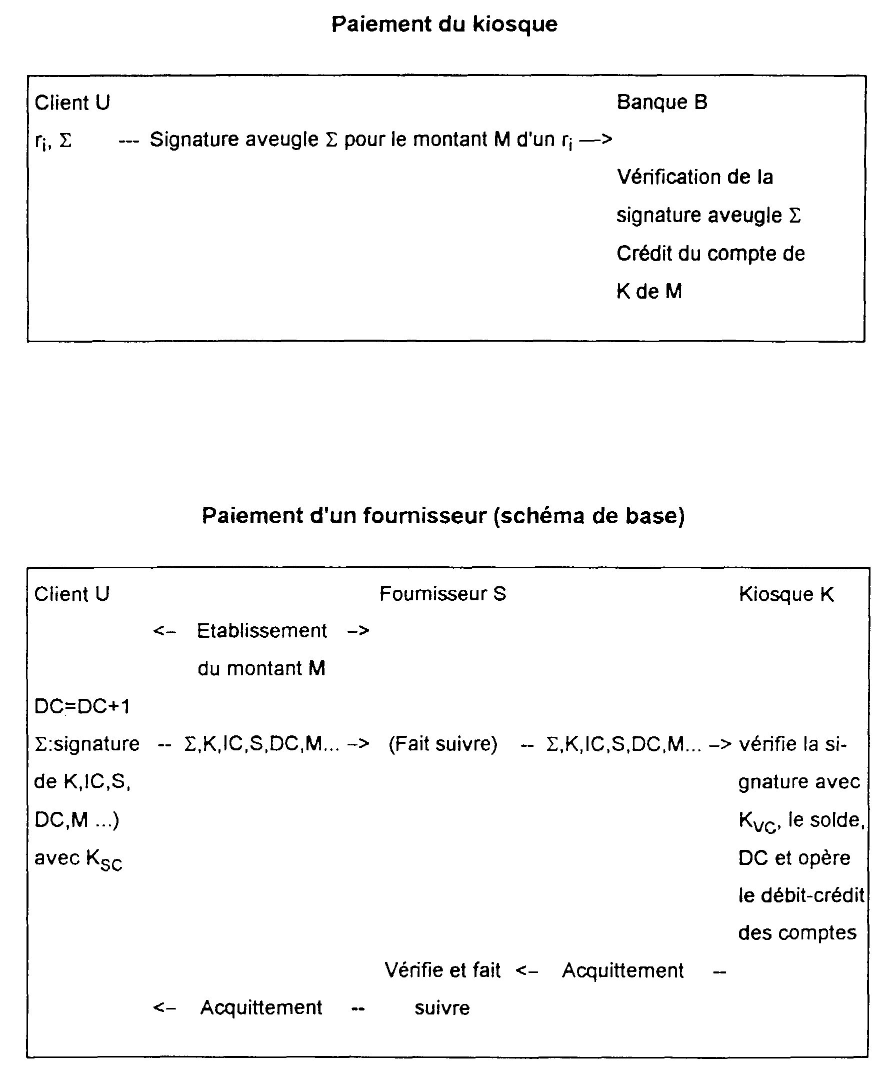

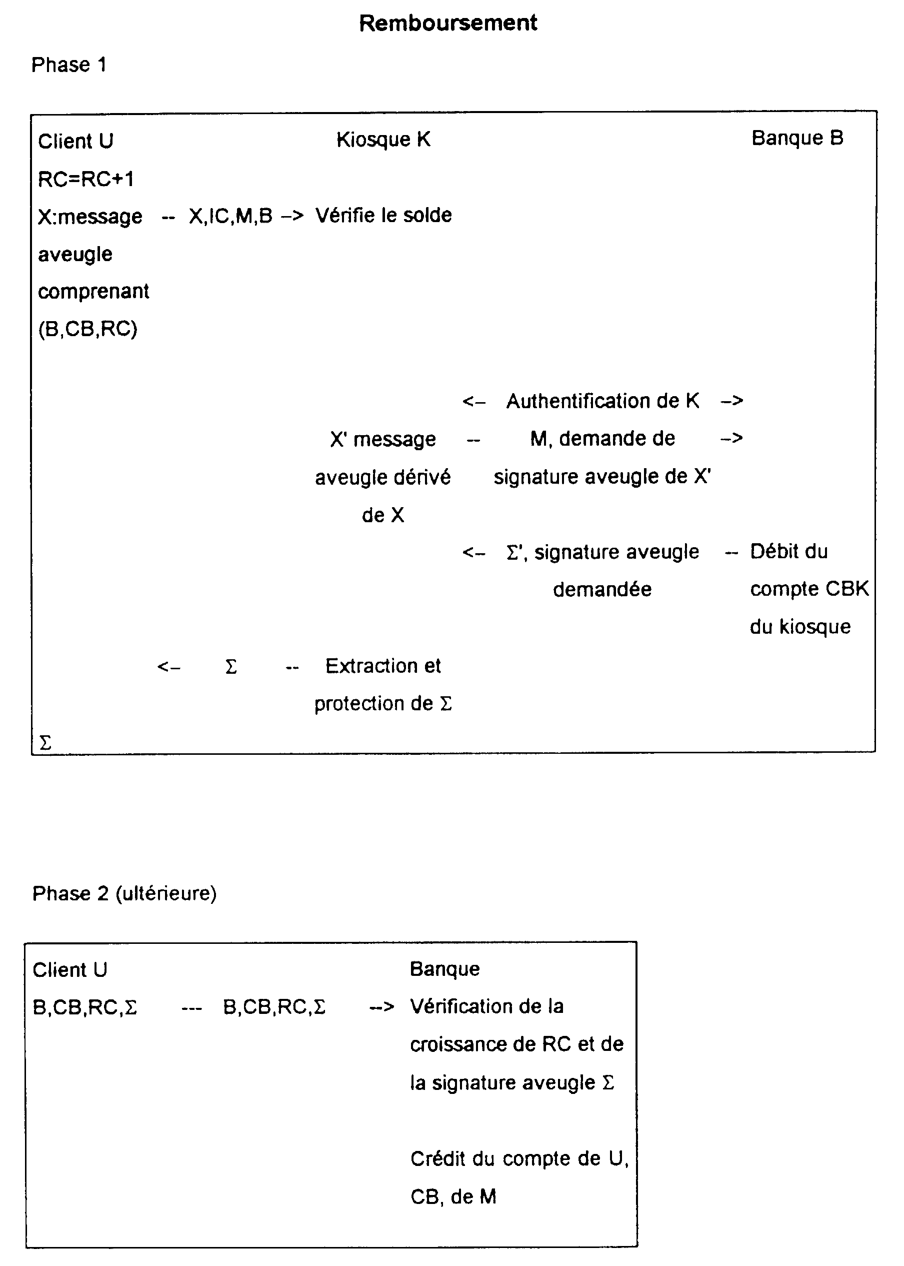

### REFERENCES

[1] "An Efficient Electronic Payment System Protecting Privacy" de J.L. Camenisch, J.M. Piveteau et M.A. Stadler (Proceedings of ESORICS 94 - "Lecture Notes In Computer Science" 875, Spinger-Verlag, Berlin, Novembre 1994)
[2] Document final de l'AFPAD sur le télépaiement ("Les procédures de paiement", annexe III, AFPAD/GT2/90/446/MS, 07/09/90)
[3] Norme Européenne ; Systèmes de cartes d'identification - Porte-monnaie électronique intersectoriel ; Architecture de sécurité (Comité Européen de Normalisation, CEN 1994, Réf. n° prEN 1546-2 : 1994 F)
[4] "Untraceable Electronic Cash" de Chaum, Fiat et Naor (Proceedings of CRYPTO 88 - "Lecture Notes In Computer Science" 403, Singer-Verlag, Berlin, 1989
[5] Demande de brevet français n° 91400916.2 du 4 avril 1991 de Benatare
[6] Communications of the association for computing machinery, vol. 28, no. 10, 1985, New York US, pages 1030-1044, XP0020000 86, David CHAUM: "Security without identification : Transaction systems to make Big Brother obsolete."

## Revendications

1. Procédé de réalisation d'une transaction, dans lequel :
- on sépare une première entité (B) d'une second entité (K), ladite première entité distribuant un moyen électronique anonyme permettant de créditer un compte, anonyme ou non, qu'un utilisateur (U) possède auprès de la seconde entité (K), et ladite second entité (K) hébergeant, pour chaque utilisateur, un ou plusieurs comptes, anonymes ou non, comptes que chaque utilisateur crédite avec le moyen électronique anonyme et débite pour payer d'autres utilisateurs ;
- on utilise le moyen électronique anonyme utilisant des nombres aléatoires, retiré auprès de la première entité (B) pour créditer le compte, anonyme ou non, hébergé par la seconde entité (K) ;
- on utilise des tables de nombres aléatoires associés à chaque compte, anonyme ou non, pour permettre un ordre des opérations de crédit de chaque compte indépendant de l'ordre des opérations de retrait de ces nombres auprès de la seconde entité (K) par l'utilisateur propriétaire du compte (U) et indépendant de l'ordre des utilisations de ces nombres pour le retrait du moyen électronique anonyme auprès de la première entité (B) ;
et en ce qu'il comprend les étapes suivantes :
- la seconde entité (K) génère les nombres aléatoires pour chaque compte, anonyme ou non, permettant un ordre des opérations de retrait de ces nombres auprès de la seconde entité (K) par l'utilisateur propriétaire du compte (U) indépendant de l'ordre des utilisations de ces nombres pour le retrait du moyen électronique anonyme auprès de la première entité distributrice (B) ;
- l'utilisateur (U), à l'aide d'un quelconque moyen de paiement, acquiert auprès de l'entité distributrice (B), le moyen électronique anonyme pour un certain montant, en utilisant l'un des nombres aléatoires attachés au compte, anonyme ou non, hébergé par la seconde entité (K), qu'il veut créditer ;
- l'utilisateur (U) crédite un compte, anonyme ou non, auprès de l'entité (K) hébergeant un ou plusieurs comptes, anonymes ou non, pour ce montant, à l'aide de ce moyen électronique anonyme acquis auprès de l'entité distributrice (B), et le nombre aléatoire utilisé est supprimé de la table attachée au compte crédité ;
- l'utilisateur (U) débite un ou plusieurs comptes, anonymes ou non, pour créditer un compte, anonyme ou non, d'un second utilisateur.

2. Procédé selon la revendication 1, caractérisé en ce que pour recharger un compte anonyme déterminé, l'utilisateur (U) obtient de la seconde entité (K) au moins un nombre aléatoire, en ce qu'il acquiert auprès de la première entité (B) une signature sous forme d'une pièce électronique pour un montant donné pour chaque nombre aléatoire, en ce qu'il dépose ensuite les pièces correspondantes sur un compte déterminé, dans un ordre quelconque et à un temps quelconque, et en ce que la seconde entité (K) présente ensuite les pièces pour être crédité par la première entité (B).

3. Procédé selon la revendication 1, caractérisé en ce que lors d'un achat, le second utilisateur (SA) envoie une requête indiquant le montant au premier utilisateur (U) qui la signe et la retourne au second utilisateur (SA), en ce que celui-ci la transmet pour paiement à la seconde entité (K) qui, en cas de crédit suffisant sur le compte anonyme utilisé par le premier utilisateur (U), acquitte la demande de façon positive et procède à l'opération de crédit-débit correspondant.

4. Procédé selon la revendication 1, caractérisé en ce que le premier utilisateur (U) dispose de la possibilité de transférer tout ou partie du solde d'un compte anonyme sur un autre compte anonyme.

5. Procédé selon la revendication 1, caractérisé en ce que le premier utilisateur (U) dispose de la possibilité de rembourser tout ou partie des sommes sur un ou plusieurs comptes anonymes auprès de la première entité (B).

6. Procédé selon la revendication 1, caractérisé en ce que le premier utilisateur acquiert, auprès de la première entité auprès de laquelle il possède un compte connu ou non, de l'argent électronique anonyme qu'il dépose sur un compte anonyme hébergé par la seconde entité dans un ordre non lié à celui de son achat.

7. Procédé selon la revendication 1, caractérisé en ce que le premier utilisateur dépense l'argent déposé sur un compte anonyme hébergé par la seconde entité, sous forme de virement sécurisé vers un compte anonyme ou non, hébergé par la seconde entité.

8. Procédé selon la revendication 7, caractérisé en ce que le virement sécurisé est réalisé après une requête particulière.

9. Procédé selon la revendication 7, caractérisé en ce que des virements sécurisés sont réalisés après une requête de virement périodique sur une unité de périodicité donnée.

10. Procédé selon la revendication 7, caractérisé en ce que des virements sécurisés sont groupés pour être présentés ensemble à la seconde entité (K), après l'obtention d'une autorisation préalable, sur un montant donné, obtenue auprès de cette même entité.

11. Procédé selon la revendication 1, caractérisé en ce que le premier utilisateur (U) se fait rembourser tout ou partie de l'argent qu'il possède sur un compte anonyme auprès d'une seconde entité pour le déposer sur un compte connu qu'il possède auprès de la première entité (B).

12. Procédé selon la revendication 1, caractérisé en ce que lors du paiement d'un second utilisateur le montant (M) signifié au premier utilisateur est un montant unitaire, en ce que le premier utilisateur de sa propre initiative envoie les signatures au second utilisateur avec la régularité nécessaire, et en ce que le second utilisateur transmet ces signatures au fil de l'eau à la seconde entité qui les acquitte de la même manière.

13. Procédé selon la revendication 1, caractérisé en ce qu'il comporte un groupement de paiements avec autorisation, cette opération étant réalisée à l'insu du premier utilisateur.

14. Procédé selon la revendication 1, caractérisé en ce que, de façon à s'assurer d'un débit de compte anonyme dont le montant est connu après la connexion à la seconde entité, on réalise, avant la consommation du service, un prépaiement sur un montant supérieur au montant effectivement constaté, en ce que le second utilisateur, après la consommation effective, remonte à la seconde entité l'information sur le montant consommé, et en ce que la seconde entité, à hauteur maxima du montant du prépaiement, débite le compte anonyme du premier utilisateur.

15. Procédé selon la revendication 1, caractérisé en ce que la liaison entre paiements est rendue impossible par l'utilisation une fois et une seule de chaque compte anonyme du premier utilisateur, et en ce que les transferts entre comptes anonymes et le remboursement anonyme facilitent cette utilisation unique des comptes anonymes.

16. Procédé selon l'une quelconque des revendications précédentes, caractérisé en ce qu'il est utilisé dans une application au télépaiement vocal.

17. Procédé selon l'une quelconque des revendications 1 à 15, caractérisé en ce qu'il est utilisé dans une application au paiement au fil de l'eau.

## Patentansprüche

1. Verfahren zur Ausführung einer Transaktion mit den folgenden Schritten:
- man trennt eine erste Einheit (B) von einer zweiten Einheit (K), wobei die genannte erste Einheit ein anonymes elektronisches Mittel ausgibt, das ermöglicht, ein Konto, anonym oder nicht, das ein Benutzer (U) bei der zweiten Einheit (K) besitzt, zu kreditieren, wobei die genannte zweite Einheit (K) für jeden Benutzer ein oder mehrere Konten, anonym oder nicht, verwaltet und jeder Benutzer diese Konten mit dem anonymen elektronischen Mittel kreditiert und, um andere Benutzer zu bezahlen, debitiert;
- man benutzt das anonyme elektronische Mittel, indem Zufallszahlen benutzt werden, gezogen bei der ersten Einheit (B), um das von einer zweiten Einheit (K) verwalteten Konto, anonym oder nicht, zu kreditieren;
- man benutzt Zufallszahlentabellen, die jedem Konto, anonym oder nicht, zugeordnet sind, um eine Reihenfolge der Gutschreiboperationen jedes Kontos unabhängig von der Reihenfolge der Abheboperationen dieser Zahlen bei der zweiten Einheit (K) durch den Inhaber-Benutzer des Kontos (U) und unabhängig von der Reihenfolge der Benutzungen dieser Zahlen für das Abheben des anonymen elektronischen Mittels bei der ersten Einheit (B) zu ermöglichen;
gekennzeichnet durch die folgenden Schritte:
- die zweite Einheit (K) erzeugt die Zufallszahlen für jedes anonyme oder nichtanonyme Konto, die eine Reihenfolge der Abheboperationen dieser Zahlen bei der zweiten Einheit (K) durch den Inhaber-Benutzer des Kontos (U) ermöglichen, unabhängig von der Reihenfolge der Benutzungen dieser Zahlen für das Abheben des anonymen elektronischen Mittels bei der ersten, ausgebenden Einheit (B) ;
- der Benutzer (U) erwirbt mit irgendeinem Zahlungsmittel bei der ausgebenden Einheit (B) das anonyme elektronische Mittel über einen bestimmten Betrag, indem er eine Zufallszahl benutzt, die mit dem anonymen oder nichtanonymen, durch die zweite Einheit (K) verwalteten Konto, das er kreditieren möchte, verknüpft ist;
- der Benutzer (U) kreditiert diesen Betrag einem anonymen oder nichtanonymen Konto der Einheit (K), die ein oder mehrere anonyme oder nichtanonyme Konten verwaltet, mit Hilfe dieses anonymen elektronischen Mittels, das er bei der ausgebenden Einheit (B) erworben hat, wobei die benutzte Zufallszahl in der Tabelle gelöscht wird, die mit dem kreditierten Konto verknüpft ist;
- der Benutzer (U) debitiert ein oder mehrere anonyme oder nichtanonyme Konten, um ein anononymes oder nichtanonymes Konto eines zweiten Benutzers zu kreditieren.

2. Verfahren nach Anspruch 1, dadurch gekennzeichnet, daß der Benutzer (U) für das Wiederauffüllen eines bestimmten anonymen Kontos von der zweiten Einheit (K) wenigstens eine Zufallszahl erhält, daß er bei der ersten Einheit (B) eine Signatur in Form eines elektronischen Belegs über einen bestimmten Betrag für jede Zufallszahl erwirbt, daß er anschließend die entsprechenden Belege in einer beliebigen Reihenfolge und zu einem beliebigen Zeitpunkt auf einem bestimmten Konto deponiert, und daß die zweite Einheit (K) anschließend die Belege präsentiert, um von der ersten Einheit (B) kreditiert zu werden.

3. Verfahren nach Anspruch 1, dadurch gekennzeichnet, daß bei einem Kauf der zweite Benutzer (SA) eine Forderung sendet, die dem ersten Benutzer (U) den Betrag angibt, den dieser signiert und an den zweiten Benutzer (SA) retourniert, daß dieser ihn zur Bezahlung an die zweite Einheit (K) überträgt, die im Falle eines ausreichenden Kedits auf dem durch den ersten Benutzer (U) benutzten anonymen Konto die Forderung positiv quittiert und die entsprechende Soll-Haben-Operation ausführt.

4. Verfahren nach Anspruch 1, dadurch gekennzeichnet, daß der erste Benutzer (U) die Möglichkeit hat, den Saldo ganz oder teilweise von einem anonymen Konto auf ein anderes anonymes Konto zu transferieren.

5. Verfahren nach Anspruch 1, dadurch gekennzeichnet, daß der erste Benutzer (U) die Möglichkeit hat, Summen ganz oder teilweise auf ein oder mehrere anonyme Konten bei der ersten Einheit (B) zu erstatten.

6. Verfahren nach Anspruch 1, dadurch gekennzeichnet, daß der erste Benutzer bei der ersten Einheit, bei der er ein bekanntes oder nichtbekanntes Konto besitzt, anonymes elektronisches Geld erwirbt, das er in einer Reihenfolge, die nicht mit derjenigen seines Kaufs verknüpft ist, auf einem anonymes Konto deponiert, das durch eine zweite Einheit verwaltet wird.

7. Verfahren nach Anspruch 1, dadurch gekennzeichnet, daß der erste Benutzer das auf einem durch die zweite Einheit verwalteten anonymen Konto deponierte Geld in Form von gesicherten Überweisungen auf ein anonymes oder nichtanonymes Konto, verwaltet durch eine zweite Einheit, ausgibt.

8. Verfahren nach Anspruch 7, dadurch gekennzeichnet, daß die gesichterte Überweisung nach einer speziellen Anforderung realisiert wird.

9. Verfahren nach Anspruch 7, dadurch gekennzeichnet, daß gesicherte Überweisungen nach einer Anforderung einer periodischen Überweisung über eine bestimmte Periodizitätseinheit realisiert werden.

10. Verfahren nach Anspruch 7, dadurch gekennzeichnet, daß gesicherte Überweisungen zusammengefaßt werden, um nach Erhalt einer vorausgehenden Ermächtigung gemeinsam der zweiten Einheit (K) präsentiert zu werden, über einen bestimmten Betrag, erhalten bei dieser selben Einheit.

11. Verfahren nach Anspruch 1, dadurch gekennzeichnet, daß der erste Benutzer (U) Geld, das er auf einem anonymen Konto bei einer zweiten Einheit besitzt, sich ganz oder teilweise zurückerstatten läßt, um es auf einem bekannten Konto, das er bei der ersten Einheit (B) besitzt, zu deponieren.

12. Verfahren nach Anspruch 1, dadurch gekennzeichnet, daß bei der Zahlung eines zweiten Benutzers der dem ersten Benutzer zugestellte Betrag (M) ein Einheitsbetrag ist, daß der erste Benutzer aus eigener Initiative dem zweiten Benutzer die Signaturen mit der nötigen Regelmäßigkeit sendet, und daß der zweite Benutzer diese Signaturen mit dem Strom an die zweite Einheit überträgt, die sie in gleicher Weise quittiert.

13. Verfahren nach Anspruch 1, dadurch gekennzeichnet, daß es eine Zusammenfassung von Zahlungen mit Ermächtigung umfaßt, wobei diese Operation ohne Wissen des ersten Benutzers realisiert wird.

14. Verfahren nach Anspruch 1, dadurch gekennzeichnet, daß man, um sich eines Debets des anonymen Kontos zu versichern, dessen Betrag nach der Verbindung mit der zweiten Einheit bekannt ist, vor dem Verbrauch der Dienstleistung eine Vorauszahlung über einen Betrag realisiert, der höher ist als der effektiv festgestellte Betrag, daß der zweite Benutzer nach dem effektiven Verbrauch der zweiten Einheit die Information über den verbrauchten Betrag rückmeldet, und daß die zweite Einheit das anonyme Konto des ersten Benutzers mit der maximalen Höhe des Vorauszahlungsbetrags belastet.

15. Verfahren nach Anspruch 1, dadurch gekennzeichnet, daß die Verbindung zwischen Zahlungen durch die einmalige und einzige Benutzung jedes anonymen Kontos des ersten Benutzers unmöglich gemacht wird, und dadurch, daß die Transfers zwischen anonymen Konten und die anonyme Rückzahlung diese einmalige Benutzung der anonymen Konten erleichert.

16. Verfahren nach einem der vorangehenden Ansprüche, dadurch gekennzeichnet, daß es in einer Anwendung des vokalen Fernzahlungsverkehrs benutzt wird.

17. Verfahren nach einem der Ansprüche 1 bis 15, dadurch gekennzeichnet, daß es bei einer Anwendung auf eine Zahlung mit dem Strom benutzt wird.

## Claims

1. Process for performing a transaction, wherein:
- a separation is made between a first entity (B) from a second entity (K), said first entity distributing an anonymous electronic means making it possible to credit an anonymous or non-anonymous account which a user (U) has at the second entity (K), and said second entity (K) hosting, for each user, one or more anonymous or non-anonymous accounts credited by each user with the anonymous electronic means and debited in order to pay other users,
- use is made of the anonymous electronic means utilizing random numbers, withdrawn from a first entity (B) for crediting the anonymous or non-anonymous account hosted by the second entity (K),
- use is made of random number tables associated with each anonymous or non-anonymous account for permitting an order of credit operations of each account independent of the order of withdrawal operations with respect to said numbers from the second entity (K) by the user (U) owning the account and independent of the order of uses of these numbers for the withdrawal of anonymous electronic means from the first entity (B),
and which comprises the following stages:
- the second entity (K) generating the random numbers for each anonymous or non-anonymous account permitting an order of withdrawal operations of these numbers from the second entity (K) by the user (U) owning the account independent of the order of uses of these numbers for the withdrawal of the anonymous electronic means from the first distributing entity (B),
- with the aid of a random payment means, the user (U) acquires from the distributing entity (B) the anonymous electronic means for a certain amount, using one of the random numbers attached to the anonymous or non-anonymous account hosted by the second entity (K) which he wishes to credit,
- the user (U) credits an anonymous or non-anonymous account at the entity (K) hosing one or more anonymous or non-anonymous accounts for this amount, with the aid of said anonymous electronic means acquired from the distributing entity (B) and the random number used is deleted from the table attached to the credited account,
- the user (U) debits one or more anonymous or non-anonymous accounts in order to credit an anonymous or non-anonymous account of a second user.

2. Process according to claim 1, characterized in that for the reloading of a given anonymous account, the user (U) obtains from the second entity (K) at least one random number, he acquires from the first entity (B) a signature in the form of an electronic coin for a given amount for each random number, he then deposits the corresponding coins at a given account, in a random order and at a random time and the second entity (K) then presents the coins for crediting by the first entity (B).

3. Process according to claim 1, characterized in that, during a purchase, the second user (SA) sends a request indicating the amount to the first user (U), who signs and returns it to the second user (SA), the latter transmits it for payment to the second entity (K) which, in the case of an adequate credit in the anonymous account used by the first user (U), positively acknowledges the request and carries out the corresponding credit-debit operation.

4. Process according to claim 1, characterized in that the first user (U) has the possibility to transfer all or part of the balance of one anonymous account to another anonymous account.

5. Process according to claim 1, characterized in that the first user (U) has the possibility to reimburse all or part of the sums in one or more anonymous accounts to the first entity (B).

6. Process according to claim 1, characterized in that the first user acquires, from the first entity where he has a known or unknown account, anonymous electronic cash, which he deposits in an anonymous account hosted by the second entity in an order not linked with the purchase order.

7. Process according to claim 1, characterized in that the first user spends the cash in an anonymous account hosted by the second entity, in the form of a securized transfer to an anonymous or non-anonymous account hosted by the second entity.

8. Process according to claim 7, characterized in that the securized transfer is carried out after a special request.

9. Process according to claim 7, characterized in that securized transfers are carried out following a periodic transfer request on a given periodicity unit.

10. Process according to claim 7, characterized in that securized transfers are grouped to be presented together to the second entity, following the obtaining of a prior authorization, with respect to a given amount, obtained from said same entity.

11. Process according to claim 1, characterized in that the first user (U) is wholly or partly reimbursed for the cash he has in an anonymous account at a second entity in order to deposit it at a known account which he has at the first entity (B).

12. Process according to claim 1, characterized in that during the payment of a second user the amount (M) indicated to the first user is a unitary amount, wherein by his own initiative the first user sends the signatures to the second user with the necessary regularity and wherein the second user transmits these signatures in streamline form to the second entity, which acknowledges them in the same way.

13. Process according to claim 1, characterized in that it has a group of payments with authorization, said operation being performed unknown to the first user.

14. Process according to claim 1, characterized in that in a manner such as to ensure a debiting of an anonymous account, whose amount is known following the connection to the second entity, prior to the use of the service, a prepayment is made on an amount exceeding the effectively established amount, wherein the second user, following the effective use, supplies the second entity with information on the used amount and wherein the second entity, with a maximum prepayment amount, debits the anonymous account of the first user.

15. Process according to claim 1, characterized in that the link between payments is rendered impossible by the use of each anonymous account of the first user a single time and wherein the transfers between anonymous accounts and the anonymous reimbursement facilitate this single use of the anonymous accounts.

16. Process according to any one of the preceding claims, characterized in that it is used in a voice telepayment application.

17. Process according to any one of the claims 1 to 15, characterized in that it is used in a streamline payment application.
